**Europäisches Patentamt**

**European Patent Office**

**Office européen des brevets**

(11) Veröffentlichungsnummer: **0 249 711 B2**

(12) # NEUE EUROPÄISCHE PATENTSCHRIFT

(45) Veröffentlichungstag der neue Patentschrift:
**11.01.95**

(51) Int. Cl.6: **B01F 17/34**, C08J 9/22

(21) Anmeldenummer: **87105524.0**

(22) Anmeldetag: **14.04.87**

Die Akte enthält technische Angaben, die nach dem Eingang der Anmeldung eingereicht wurden und die nicht in dieser Patentschrift enthalten sind.

(54) **Verfahren zur Herstellung von niedrigviskosen wässrigen Dispersionen von Glycerinestern langkettiger Fettsäuren.**

(30) Priorität: **14.06.86 DE 3620037**

(43) Veröffentlichungstag der Anmeldung:
**23.12.87 Patentblatt 87/52**

(45) Bekanntmachung des Hinweises auf die Patenterteilung:
**27.09.89 Patentblatt 89/39**

(45) Bekanntmachung des Hinweises auf die Entsheidung über den Einspruch:
**11.01.95 Patentblatt 95/02**

(84) Benannte Vertragsstaaten:
**AT BE DE FR GB IT NL SE**

(56) Entgegenhaltungen:
EP-A- 0 103 854     BE-A- 523 400
CH-A- 143 379     DE-A- 2 360 901
DE-A- 2 932 321     DE-B- 2 509 255
FR-A- 2 304 393     FR-A- 2 379 565

**K. Lindner, Tenside-Textilhilfsmittel-Wasch-rohstoffe, Band I (1964), S. 603,612**

**Parfümerie und Kosmetik, Nr. 1 (1964), S. 1-5**

(73) Patentinhaber: **HÜLS AKTIENGESELLSCHAFT**

**D-45764 Marl (DE)**

(72) Erfinder: **Leithäuser, Horst, Dr.**
**Langehegge 151**
**D-4370 Marl (DE)**
Erfinder: **Reese, Dirk, Dr.**
**Stargarder Strasse 32**
**D-4370 Marl (DE)**
Erfinder: **Trautmann, Walter**
**Breddenkampstrasse 112**
**D-4370 Marl (DE)**

**Beschreibung**

Glycerinester langkettiger Fettsäuren werden bekanntlich als Beschichtungsmittel für blähfähige kleinteilige Styrolpolymerisate verwendet. Die Glycerinester werden dabei sowohl in Pulverform auf die Polymerisate aufgetrommelt (DE-B 23 60 901), oder als Lösung, oder wäßrige Dispersion oder Organosol eingesetzt (vgl. u. a. DE-A 29 32 321, DE-A 33 17 169 und den dort zitierten Stand der Technik). In vielen Fällen wurden die Glycerinester auch zusammen mit anderen Beschichtungsmitteln, wie Calcium-, Magnesium- oder Zinkstearat oder Bis-stearyl-ethylendiamin eingesetzt.

Die als Beschichtungsmittel verwendeten handelsüblichen Glycerinester (Partialglyceride) sind Gemische aus Mono-, Di- und Triglycerinestern mit hohem Anteil an Monoestern (Monoglyceriden). Der 1-Monoestergehalt liegt üblicherweise zwischen 35 und 45 Gewichtsprozent, er kann aber auch bis zu 90 %, betragen. Der Anteil an Triestern (Triglyceriden) in den Produkten des Handels ist schwankend; er liegt bei etwa 9 % und übersteigt im allgemeinen 15 Gewichtsprozent nicht. Höhere Gehalte an Triglyceriden sind allerdings bequem einstellbar. Die reinen Triglyceride sind wohlfeile Handelsprodukte.

Die als Beschichtungsmittel verwendeten handelsüblichen Glycerinester (Partialglyceride) enthalten vorzugsweise Stearinsäure als Fettsäure und je nach Art der Herstellung und Zusammensetzung 0 bis 6 Gewichtsprozent freies Glycerin. Sie werden eingeteilt in selbstemulgierbare (se-) und nicht-selbstemulgierbare Typen (nse-). Die selbstemulgierbaren, seifenhaltigen Glycerinester enthalten Kalium- oder Natrium-Seife und in der Regel einen höheren Anteil an freiem Glycerin (bis zu 6 %) als die nicht-selbstemulgierbaren Typen. Diese seifenhaltigen Glycerinester werden u. a. für die Herstellung wäßriger Dispersionen verwendet; sie haben den Nachteil, daß die Viskosität der aus ihnen hergestellten Dispersionen von Liefercharge zu Liefercharge stark schwankt. Bei der Herstellung der wäßrigen Dispersionen sind daher z. B. die Rührwerke mit erheblichen Sicherheitszuschlägen auszulegen. Diese erschwerte Handhabung beeinträchtigt die Wirtschaftlichkeit; so können z. B. Konzentrationen von 20 Gewichtsprozent aus Viskositätsgründen kaum überschritten werden.

Zunehmend gelten diese erschwerten Bedingungen auch für Dispersionen, die neben den selbstemulgierbaren Glycerinestern die Metallseifen Zink- oder Magnesiumstearat enthalten. Derartige wäßrige Dispersionen werden vorteilhaft zum Beschichten der Oberfläche blähfähiger kleinteiliger Styrolpolymerisate verwendet, da sich so problemlos gleichmäßige Überzüge erzielen lassen. Insbesondere wird in den Fällen, wo neben Glycerinestern auch noch Metallseifen mit aufgebracht werden sollen, durch die Verwendung einer auch die Metallseife enthaltenden Dispersion sichergestellt, daß alle kleinteiligen Styrolpolymerisate Metallseife und Glycerinester im gewünschten Verhältnis erhalten.

Die nicht-selbstemulgierbaren Glycerinester sind seifenfrei. Ihr Gehalt an freiem Glycerin liegt unter 2, inbesonder unter 1,5-Gewichts-%. Sie können in der vorliegenden Form nicht zur Herstellung wäßriger Dispersionen verwendet werden.

Aufgabe der Erfindung ist es, wäßrige Dispersionen von Glycerinestern langkettiger Fettsäuren bereitzustellen, welche eine von Charge zu Charge gleichbleibend niedrige Viskosität besitzen.

Die Lösung der Aufgabe gelingt nach einem in den Patentansprüchen dargelegten Verfahren.

Ausgangsprodukte sind demnach seifenfreie nicht-selbstemulgierbare Glycerinester langkettiger gesättigter Carbonsäuren, vorzugsweise solche mit 14 bis 24 Kohlenstoffatomen. Besonders bevorzugt sind die aus natürlichen Fetten hergestellten Produkte des Handels, die ausschließlich geradzahlige Fettsäuren der Kettenlänge $C_{16}$-$C_{18}$, insbesondere Stearinsäure, als Säurekomponente enthalten.

Der Gehalt an freiem Glycerin in diesen Estern liegt unter 2, vorzugsweise unter 1,5 Gewichts-%. Das Verhältnis von Mono-, Di-, und Triester kann in weiten Grenzen variiert werden. Es richtet sich ausschließlich nach dem angestrebten Verwendungszweck. Der Anteil an Monoglyceriden soll jedoch unter 55 %, bevorzugt bei 30 bis 45 und insbesondere bei 35 bis 45 % liegen. Es können auch Triglyceride, insbesondere Tristearate verwendet werden, d. h. Glycerinester mit einem Anteil von 0 % an Monoestern. Es können auch Mischungen aus den handelsüblichen Monoestern und bzw. oder Triestern verwendet werden, die den vorgenannten Gehalt an Monoestern enthalten.

Für Dispersionen zum Beschichten kleinteiliger blähfähiger Styrolpolymerisate sind bevorzugt die wohlfeilen seifenfreien Mono-distearate mit 1-Monoestergehalten von 35 % bis 45 %, sowie Tristearate verfügbar. Ihr Gehalt an freiem Glycerin liegt bei 0 bis 1,5 Gewichts-%. Als Mischkomponente ist 90prozentiges Glycerinmonostearat geeignet und als Handelsprodukt verfügbar.

Das Aufbringen auf die kleinteiligen blähfähigen Styrolpolymerisate kann auch erfolgen, indem man unterschiedlich zusammengesetzte wäßrige Dispersionen nacheinander auf die Oberfläche der blähfähigen Styrolpolymerisate aufbringt, sodaß die gewünschte Zusammensetzung erreicht wird.

Die Herstellung der niedrigviskosen, wäßrigen Dispersionen der Glycerinester kann nach mehreren Methoden erfolgen:

Methode A

Man mischt einen nicht-selbstemulgierbaren Glycerinester (nse) des Handels mit einem selbstemulgierbaren (se) Typ und dispergiert dann das Gemisch in etwa 65-90 °C, bevorzugt 75 - 85 °C warmen Wasser. Die dadurch erreichbaren Viskositäten liegen im allgemeinen jedoch höher als bei den beiden nachstehend beschriebenen Methoden B + C. Auch liegt der Glyceringehalt noch relativ hoch. Für die Herstellung von wäßrigen Dispersionen als Beschichtungsmittel für blähfähige kleinteilige Styrolpolymerisate ist diese Methode weniger geeignet.

Methode B

Man geht von einem nse-Glycerinester aus und verseift ihn partiell durch Zugabe einer definierten Menge KOH oder NaOH bei etwa 65 - 90, bevorzugt 75 - 85°C. Diese kostengünstige Methode B hat aber den Nachteil, daß sich die Zusammensetzung und der Glyceringehalt des nse-Glycerinesters ändert, sodaß diese Methode für die Herstellung von wäßrigen Dispersionen für die Beschichtung blähfähiger kleinteiliger Styrolpolymerisate weniger bevorzugt wird.

Methode C

Diese Methode C wird vorteilhaft verwendet zur Herstellung niedrigviskoser wäßriger Dispersionen von Glycerinestern zum Beschichten blähfähiger, kleinteiliger Styrolpolymerisate. In eine 65 - 90, bevorzugt 75 - 85 °C heiße Lösung der Alkaliseife langkettiger Fettsäuren werden die in Wasser unlösliche bzw. die Mischung aus wasserunlöslichen nse-Glycerinestern und gegebenenfalls die anderen Metallseifen unter Rühren eingetragen.

Die Dispersionen sind stabil und so niedrigviskos, daß sich problemlos Dispersionen mit Feststoffgehalten von 5 % bis 50 %, bevorzugt von 15 bis 40 Gewichtsprozent herstellen lassen.

Der Anteil an Alkaliseifen langkettiger Fettsäuren liegt in der wäßrigen Dispersion im Bereich von 0,5 % bis 6 %, bevorzugt im Bereich von 1 bis 4 Gewichtsprozent, bezogen auf den Glycerinester.

Die Säurekomponente ergibt sich bei Methode A und B aus dem zugesetzten seifenhaltigen Anteil bzw. dem partiell verseiften Glycerinester.

Bei Methode C kann sowohl vorteilhaft die Säurekomponente als auch das Kation der Seife ausgewählt werden.

Bevorzugt wird Kaliumstearat verwendet.

Andere brauchbare Alkaliseifen sind z. B. Natriumstearat, Natrium- oder Kaliumpalmitat, Natrium- oder Kaliumlaurat oder -oleat. Sie werden zweckmäßigerweise aus der freien Säure und NaOH oder KOH durch Eintragen in die auf 65 - 90, bevorzugt 75 - 85 °C erwärmte Wassermenge hergestellt. Als weitere Metallseifen werden falls gewünscht, Zink-Magnesium oder Calciumstearat in üblicher Weise zusätzlich verwendet. Diese zusätzlichen Metallseifen können auch bei der Methode A oder B zugesetzt werden.

In den folgenden Tabellen sind die Ergebnisse der Vergleichsversuche und der Versuche zusammengestellt.

Tabelle 1 enthält die Vergleichsversuche (V) des Standes der Technik. Als Handelsprodukte werden seifenhaltige Glycerinmono-distearate verwendet, die einem Anteil von 40 - 45 % an 1-Monoglycerid (Monoester) besitzen. Es ist erkennbar, daß die Viskosität der daraus hergestellten Dispersion stark schwankt. Die Dispersionen werden erhalten durch Eintragen von 120 g des seifenhaltigen Glycerinmonodistearates in 480 g auf 80 °C erwärmtes vollentsalztes Wasser unter Rühren bei 350 Upm. Die Dispersionen sind stabil und homogen, besitzen jedoch zu hohe und von Charge zu Charge unterschiedliche Viskosität.

In Tabelle 2 sind die Versuche der Erfindung zusammengestellt. Als Ausgangsprodukte werden seifenfreie Glycerinmonodistearate des Handels verwendet, die ebenfalls einen Anteil von 40 bis 45 % an 1-Monoglycerid (Monoester) besitzen. Die Beispiele 1, 2 und 3 sind nach Methode A und B hergestellt, alle anderen Beispiele und Vergleichsbeispiele nach Methode C. Beispiel 13 zeigt, daß reine Triglyceride noch bedingt verwendbar sind. Die Vergleichsbeispiele V3 und V4 verdeutlichen, daß reine Monoglyceride oder Mischungen mit einem Monoesteranteil von mehr als 55 % nicht brauchbar sind zur Herstellung niedrigviskoser wäßriger Dispersionen.

Tabelle 1

480 g VE-Wasser werden auf 80°C erhitzt und unter Rühren (350 Upm) 120 g Glycerin-monodistearat zugegeben. Die Viskosität der Dispersion wird nach unterschiedlichen Zeiten gemessen (s. Tabelle)

| | Glycerin-mono-Distearat (se-Typ) | enthält Seifentyp | Konz. bez. a. Glycerin-ester | Konz. d. Dis-persion | Viskosität (m. Pas) bei 80°C nach | | | | Bemer-kung |
|---|---|---|---|---|---|---|---|---|---|
| | | | | | 30' | 60' | 3006 | 24 h | |
| V1 | Handelsprodukt 1 | K-stearat | ca. 6% | 20% | 920 | 710 | 415 | 110 | Liefe-rung 1 |
| V1a | Handelsprodukt 1a | | | 20% | nicht meßbar | 1550 | 1460 | 830 | Liefe-rung 2 |
| V2 | Handelsprodukt 2 | Na-stearat | ca. 6% | 20% | nicht meßbar, zu hohe Viskosität | | 5500 | 4750 | |
| | | | | 15% | nicht meßbar, zu hohe Viskosität | | 1680 | 1370 | |
| | | | | 10% | | 720 | 680 | 660 | |

Tabelle 2

Herstellung analog den Versuchen in Tabelle 1

| No. | Glycerin-mono-distearate | | Seifentyp | Seifenkonz. | Seifenzugabe | Konz. d. Disper. | Viskosität (m. Pas) bei 80°C nach | | gH$_2$O | Bemerkungen |
|---|---|---|---|---|---|---|---|---|---|---|
| | nse-Typ | se-Typ | | | | | 60' | 300' | | |
| 1. | Handelsprod. 3 (40 g) | Handelsprod. 1 (80 g) | K-stear. | ca. 4% | se-Typ | 20% | 230 | 60 | 480 | Methode A |
| 2. | Handelsprod. 3 (120 g) | – | 0,36 g KOH | ca. 1,76% | part. Vers. | 20% | 6 | 5,5 | | Methode B |
| 3. | Handelsprod. 3 (120 g) | – | 0,5 g KOH | ca. 2,9% | part. Vers. | 20% | 20,5 | 14,5 | | Methode B |
| 4. | Handelsprod. 4 (120 g) | – | 2,4 g K-stear. | ca. 2% | Vorlage | 20% | 6 | 5 | 478 | – |
| 5. | Handelsprod. 4 (120 g) | – | 4,8 g K-stear. | ca. 4% | Vorlage | 20% | 15 | 10 | 476 | – |
| 6. | Handelsprod. 4 (120 g) | – | 7,2 g K-stear. | ca. 6% | Vorlage | 20% | 62 | 33 | 473 | – |
| 7. | Handelsprod. 4 (180 g) | – | 7,2 g K-stear. | ca. 4% | Vorlage | 30% | 18 | 16 | 413 | – |
| 8. | Handelsprod. 4 (300 g) | – | 6 g K-stear. | ca. 2% | Vorlage | 50% | 19 | 17 | 294 | – |
| 9. | Handelsprod. 3 (300 g) | – | 1,5 g K-stear. | ca. 0,5% | Vorlage | 50% | 36 | 34 | 299 | – |
| 10. | Handelsprod. 3 (120 g) | – | 4,8 g K-stear. | ca. 4% | Vorlage | 20% | 397 | 392 | 464 | + 12 g Zn-stearat |
| 11. | Handelsprod. 3 (240 g) | – | 4,8 g K-stear. | ca. 2% | Vorlage | 40% | 725 | 715 | 332 | + 24 g Zn-stearat |
| 12. | Handelsprod. 3 (120 g) +Triglycerid (120 g) | – | 4,8 g K-stear. | ca. 2% | Vorlage | 40% | 95 | 89 | 356 | – |
| 13. | Triglycerid (240 g) | – | 4,8 g K-stear. | ca. 2% | Vorlage | 40% | 9 | 7 | 356 | –*) |
| V3 | Monoglycerid (240 g) | – | 4,8 g K-stear. | ca. 2% | Vorlage | 40% | nicht gemessen | | 356 | zu viskos |
| V4 | Handelsprod. 3 (96 g) +Monoglycerid (96 g) +Triglycerid (48 g) | – | 9,6 g K-stear. | ca. 4% | Vorlage | 40% | nicht gemessen | | 350 | zu viskos |
| 14. | Handelsprod. 4 (120 g) | – | Na-stear. | ca. 2% | Vorlage | 20% | 6 | 5 | 480 | – |
| 15. | Handelsprod. 4 (120 g) | – | Na-palmit. | ca. 2% | Vorlage | 20% | 5,5 | 4,5 | 480 | |
| 16. | Handelsprod. 4 (120 g) | – | Na-Laurat | ca. 2% | Vorlage | 20% | 6 | 5,5 | 480 | |
| 17. | Handelsprod. 4 (120 g) | – | Na-Oleat | ca. 2% | Vorlage | 20% | 5 | 4,5 | 480 | |

*) stabil nur bei laufendem Rührer

**Patentansprüche**

1. Verfahren zur Herstellung von niedrigviskosen wäßrigen Dispersionen von Glycerinestern langkettiger Fettsäuren zum Beschichten blähfähiger, kleinteiliger Styrolpolymerisate durch Dispergieren unter mechanischer Bewegung in wäßriger Phase, dadurch gekennzeichnet, daß man wäßrige Alkaliseifen bei 65-90°C vorlegt und seifenfreie Glycerinester langkettiger Fettsäuren mit einem Gehalt an freiem Glycerin von weniger als zwei Gewichtsprozent und einem Monoglyceridanteil von weniger als 55% zugibt und wobei man einen Gehalt von 0,5 bis 6 Gewichtsprozent, bezogen auf die Glycerinester, an Alkaliseifen langkettiger Fettsäuren einstellt.

2. Verfahren nach Anspruch 1, dadurch gekennzeichnet, daß die Dispersionen zusätzlich Zink-, Magnesium- oder Calciumstearat enthalten.

3. Verfahren nach Anspruch 1 oder 2, dadurch gekennzeichnet, daß die Glycerinester Fettsäuren mit 14-24 Kohlenstoffatomen enthalten.

**Claims**

1. A process for the preparation of low-viscosity aqueous dispersions of glycerol esters of long-chain fatty acids for coating expandable styrene polymers in the form of small particles, by dispersion with mechanical agitation in an aqueous phase, characterised in that aqueous alkali metal soaps are provided at 65 to 90°C and soap-free glycerol esters of long-chain fatty acids having a free glycerol content of less than 2% by weight and a monoglyceride proportion of less than 55% are added, whereby the content of alkali metal soaps of long-chain fatty acids is adjusted to 0.5 to 6% by weight, relative to the glycerol esters.

2. A process according to claim 1, characterised in that the dispersions additionally contain zinc stearate, magnesium stearate or calcium stearate.

3. A process according to claim 1 or 2, characterised in that the glycerol esters contain fatty acids of 14 to 24 carbon atoms.

**Revendications**

1. Procédé de préparation de dispersions aqueuses, faiblement visqueuses, d'esters glycériques d'acides gras à longue chaîne, pour l'enduction de produits expansibles de polymérisation du styrène se présentant en fines particules, par dispersion en phase aqueuse avec brassage mécanique, caractérisé en ce que l'on met en place des savons alcalins aqueux à une température de 65 à 90°C et que l'on ajoute des esters glycériques, exempts de savons, d'acides gras à longue chaîne d'une teneur en glycérol libre inférieure à deux pour cent en poids et présentant une fraction de monoglycéride inférieure à 55 %, en établissant une teneur de 0,5 à 6 % en poids, relativement aux esters glycériques, de savons alcalins d'acides gras à longue chaîne.

2. Procédé selon la revendication 1, caractérisé en ce que les dispersions renferment complémentairement du stéarate de zinc, de magnésidum ou de calcium.

3. Procédé selon la revendication 1 ou 2, caractérisé en ce que les esters glycériques renferment des acides gras comportant de 14 à 24 atomes de carbone.